# EUROPEAN PATENT SPECIFICATION

(11) **EP 3 476 103 B1**
(45) Date of publication and mention of the grant of the patent: **15.04.2020**
(21) Application number: 17732882.0
(22) Date of filing: 22.06.2017
(51) Int. Cl.: H04L 29/08

(54) **METHOD, APPARATUS AND MACHINE READABLE MEDIUM FOR MEASURING USER AVAILABILITY OR RECEPTIVENESS TO NOTIFICATIONS**
VERFAHREN, VORRICHTUNG UND MASCHINENLESBARES MEDIUM ZUM MESSEN DER BENUTZERVERFÜGBARKEIT ODER DER AUFNAHMEFÄHIGKEIT FÜR BENACHRICHTIGUNGEN
PROCÉDÉ, APPAREIL ET SUPPORT LISIBLE PAR MACHINE DE MESURE DE LA DISPONIBILITÉ OU DE LA RÉCEPTIVITÉ DE L'UTILISATEUR POUR DES NOTIFICATIONS

(30) Priority: 23.06.2016 US 201662353601 P
(43) Date of publication of application: 01.05.2019
(73) Proprietor: Koninklijke Philips N.V., 5656 AG Eindhoven (NL)
(72) Inventor: MILOSEVIC, Mladen, 5656 AE Eindhoven (NL); LEE, Matthew, Len, 5656 AE Eindhoven (NL); SINGH, Portia, Erin, 5656 AE Eindhoven (NL)
(74) Representative: Kapoor, Pavan Puneet
(86) International application number: PCT/EP2017/065468
(87) International publication number: WO 2017/220752

(56) References cited:
- US-A1- 2004 003 042
- US-A1- 2005 021 485
- US-B2- 7 493 369

## Description

### TECHNICAL FIELD

Various embodiments described herein relate to user interaction and more particularly, but not exclusively, to a service for determining opportune times for providing notifications, messages, or other interactions to a user.

### BACKGROUND

Mobile devices such as smart phones and tablets have become the prime point of contact for most people, not just for person-to-person communications but for communications from applications and services as well. These devices can be particularly powerful for pushing information to a user via notifications or other messages rather than requiring the user to first solicit input. For example, a coaching program is able to push suggestions and information to a user to help them achieve the goal of the program throughout the day. This frees the user to go about their day without actively following the coaching program. At any point in the day, the user may receive a message from the coaching service and read the information or take suggested actions (*e*.*g*., walk to lunch rather than driving).

US 2004/003042 A1 discloses a system for forecasting one or more aspects of the user's presence and availability. In an embodiment, the system uses a learning component to generate state information, which may provide answers regarding the presence, availability, location and so on of a person.

US 7 493 369 B2 discloses a similar system for forecasting one or more aspects of the user's presence and availability. In an embodiment, a forecasting service uses one or more learning models or "learning component[s]" to determine information about the user state, in which the learning component is trained from one or more data sources associated with the user.

### SUMMARY

While the freedom to push messages to users can be beneficial to the goals of an application, it does not help to push notifications to a user when they are not free or otherwise open to participate in a user interaction. For example, if the user is currently driving their car, they are unable to read incoming messages. As another example, if the user is in a work meeting, they are unable to leave and participate in a suggested physical activity (but may be able to read a message, depending on the meeting).

It would be beneficial to provide a method and system for identifying opportune times to interact with a user. As will be described in greater detail below, various embodiments leverage the usage reported by the mobile device (*e*.*g*., text messaging, application switching, types of application being used) to gauge whether a user is currently available to act on a suggestion or receptive to read an informative message.

Accordingly, various embodiments described herein relate to a method performed by a prediction device for determining an opportune time for user interaction, the method including: receiving a request from a client application for an indication of whether a user is open to participate in a user interaction; obtaining usage information regarding the user's recent activity on a user device; applying at least one trained predictive model to the usage information to identify the user's current contextual state, wherein the current contextual state includes at least one of: an availability measure representative of the user's current ability to perform a physical action associated with the user interaction, and a receptiveness measure representative of the user's current ability to pay attention to the user interaction; determining an opportunity indication based on the user's contextual state; and providing the opportunity indication to the client application.

The method also comprises, subsequent to providing the opportunity indication to the client application: obtaining feedback information regarding the user's reaction to the client application; discerning from the feedback information a label regarding at least one of availability and receptiveness of the user; generating a training example by associating the label with the usage information; updating an existing training set by at least adding the training example to the existing training set to generate an updated training set; and retraining the at least one trained predictive model based on the updated training set.

Various embodiments described herein relate to a prediction device for determining an opportune time for user interaction, the prediction device including: a memory configured to store at least one trained predictive model for identifying a user's current contextual state, wherein the current contextual state includes at least one of: an availability measure representative of the user's current ability to perform a physical action associated with the user interaction, and a receptiveness measure representative of the user's current ability to pay attention to the user interaction; and a processor in communication with the memory, the processor being configured to: receive a request from a client application for an indication of whether a user is open to participate in a user interaction; obtain usage information regarding the user's recent activity on a user device; apply the at least one trained predictive model to the usage information; determine an opportunity indication based on the user's contextual state; and provide the opportunity indication to the client application.

Various embodiments described herein relate to a non-transitory machine-readable medium encoded with performed by a prediction device for determining an opportune time for user interaction, the non-transitory machine-readable medium including: instructions for receiving a request from a client application for an indication of whether a user is open to participate in a user interaction; instructions for obtaining usage information regarding the user's recent activity on a user device; instructions for applying at least one trained predictive model to the usage information to identify the user's current contextual state, wherein the current contextual state includes at least one of: an availability measure representative of the user's current ability to perform a physical action associated with the user interaction, and a receptiveness measure representative of the user's current ability to pay attention to the user interaction; instructions for determining an opportunity indication based on the user's contextual state; and instructions for providing the opportunity indication to the client application.

Various embodiments are described wherein the opportunity indication includes the current contextual state.

Various embodiments are described wherein at least part of the usage information is obtained via an operating system application programmer interface (API) of the user device.

Various embodiments are described wherein the steps of receiving, obtaining, applying, determining, and providing are performed by a processor of the user device.

Various embodiments additionally include receiving the at least one trained predictive model from a remote predictive model training device.

Various embodiments are described wherein the step of discerning includes applying a trained feedback interpretation model to the feedback information to receive the label.

Various embodiments are described wherein the feedback information describes the user activity on the user device subsequent to providing the opportunity indication to the client application.

Various embodiments are described wherein the step of discerning includes analyzing the feedback information together with the usage information to determine whether the user changed their usage behavior.

### BRIEF DESCRIPTION OF THE DRAWINGS

In order to better understand various example embodiments, reference is made to the accompanying drawings, wherein:
FIG. 1 illustrates an example of a functional system for performing user interactions at opportune times;
FIG. 2 illustrates an example of a hardware device for implementing a system (or a portion thereof) for performing user interactions at opportune times;
FIG. 3 illustrates a first embodiment of a system for performing user interactions at opportune times;
FIG. 4 illustrates a second embodiment of a system for performing user interactions at opportune times;
FIG. 5 illustrates an example of a method for gathering usage information from a device operating system;
FIG. 6 illustrates an example of a method for generating a feature set for use in predictive model training or application;
FIG. 7 illustrates an example of a training set for training one or more predictive models;
FIG. 8 illustrates an example of a method for processing feature sets to create training examples and generate contextual state predictions;
FIG. 9 illustrates an example of a method for updating a predictive model based on received feedback; and
FIG. 10 illustrates an example of a method for training a model.

### DETAILED DESCRIPTION

The description and drawings presented herein illustrate various principles. It will be appreciated that those skilled in the art will be able to devise various arrangements that, although not explicitly described or shown herein, embody these principles and are included within the scope of this disclosure. As used herein, the term, "or," as used herein, refers to a non-exclusive or (*i.e.,* and/or), unless otherwise indicated (*e.g.,* "or else" or "or in the alternative"). Additionally, the various embodiments described herein are not necessarily mutually exclusive and may be combined to produce additional embodiments that incorporate the principles described herein.

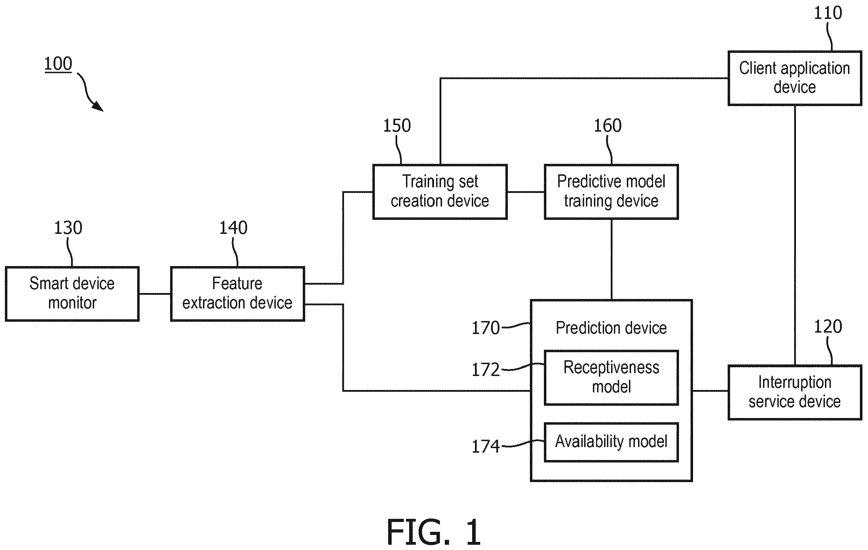

FIG. 1 illustrates an example of a functional system 100 for performing user interactions at opportune times. While various functional devices are illustrated and are each implemented in a physical device or portion thereof, it will be understood that in various embodiments functional devices may be collocated on a single device, duplicated across multiple devices, or distributed among multiple devices. For example, each functional device may be implemented in a dedicated physical device, all functional devices may be implemented in a single physical device (*e.g*., a user mobile device such as a tablet or smart phone), or any intermediate arrangement therebetween. As a further example, multiple interruption service devices 120 may be provided across geographically distributed physical servers to redundantly provide opportunity indications to various client application devices 110 based on the output of the prediction device. As yet another example, in embodiments using multiple measures of contextual state (*e*.*g*., availability and receptiveness), a separate training set creation device 150, predictive model training device 160, or prediction device 170 may be provided for each such measure and such functional devices may be distributed across different physical servers.

As shown, a client application device 110 may be a device that, according to its own operation and purposes, engages in interactions with a user such as sending notifications with information or action suggestions to a user via their smart device or other channel (*e.g*., via an app, SMS, email, phone call, wearable notification, *etc.*). The client application device may be, for example, the user's smart device (*e*.*g*., running the client application as an app), a server that is remote to the user (*e.g*., a virtual machine running the client application as a web or other service), or any device capable of executing a client application that engages in interactions with a user that are capable of delay, flexible delivery, or other ability to adjust the timing thereof.

The interruption service device 120 may be virtually any physical device (*e.g*., the user's smart device, remote server running a virtual machine, *etc*.) capable of interpreting measures of a user's contextual state provided by the prediction device and providing such indication back to the client application device 110. For example, the interruption service device 120 may interpret multiple such measures and provide a single opportunity indication (*e.g*., a token correlated to notions such as "not open," "receptive but not available," "both receptive and available," *etc.*) or may simply forward such measures as the opportunity indication. The interruption service device 120 may provide such opportunity indications on demand to the client application device 110 (*e.g*., as a query service) or upon a relevant change in the contextual state to a client application device 110 that has previously indicated a desire to receive such updates (*e.g*., as a subscription service). The client application 110 may then use these received indications to gauge when it is appropriate to initiate the user interaction.

Where the client application device 110 and interruption service device 120 are implemented in separate physical devices, the query or subscription communications may occur, e.g., via one or more networking channels. For example, if the two devices are physically close to each other *(e.g.,* if the client application device 110 is a wearable wristwatch device and the interruption service device 120 is the user's mobile phone), the communications may occur according to a short range wireless communication protocol such as near field communication (NFC), Bluetooth (including Bluetooth low energy), Wi-Fi, *etc.* In embodiments wherein the two devices are more remote from each other, the communications may traverse one or more wireless or wired networks such as Wi-Fi, 3G, 4G, LTE, or Ethernet networks. These networks may include or form part of, for example, a mobile carrier network, a cloud computing data center network, the Internet, *etc.* Where the two devices are implemented in the same physical hardware, the communications described herein may occur via on or more inter-process communications which may be provided by an operating system of the local device. Such approaches may include recording a file to be read by the other process, transmitting data to sockets associated with the respective sockets, establishing one or more pipes between the processing, writing data to shared memory, pushing events through an event bus, *etc.* In some embodiments where the two devices are implemented as part of the same process, the communications described herein may be achieved by calling or passing data to functions associated with the other functional device, writing data to a common location such as a configuration file or memory set aside for the process. Various other approaches to communication between functional devices will be apparent in the various physical and procedural contexts in which the functional devices may be implemented. Additionally, any of these approaches may be applied to communication amongst the other functional devices 130-170 described herein or other devices not illustrated depending on the particular embodiment of the system 100 being implemented.

The smart device monitor 130 is a device that monitors one or more types of raw device (*e*.*g*., mobile phone or tablet) usage information such as, for example, current device screen (*e.g.*, locked, unlocked, home screen, in an app, in app switcher, *etc.*), ringer setting (*e.g.*, high volume, low volume, high vibrate, low vibrate, silent, *etc.*), time since last unlock, historical log of locking/unlocking, battery state (*e*.*g*., charging/not charging, battery level, time to discharge), messages (*e*.*g*., pattern of messages/notifications], number of messages/notifications, number of recipients, frequency of communications in and out in a given window of time, , phone calls (*e.g*., in call/not in call, pattern of calls made/taken, pattern of missed/dismissed calls, number of calls made/taken/missed/dismissed, number of other parties if calls made/taken/missed/dismissed in a given window of time, *etc.*), current application in use (*e.g*., name, category [productivity, game, utility, *etc*.], time in current app, *etc.*), pattern of application usage (*e.g.,* number and category of apps used in a given window of time), network connection (*e.g.,* none, Wi-Fi, cellular, specific carrier/frequency, *etc.*), current Wi-Fi network (*e.g.,* SSID name, signal strength, frequency, *etc.*), signature of current Wi-Fi networks in range, signature of current connected devices (*e.g.,* via Bluetooth, NFC, *etc.*), *etc.* In some embodiments, some or more of this information may not be available directly from the OS or other applications (*i.e.,* in raw form) and instead are be extracted (as will be described in greater detail below with respect to the feature extraction device 140) from that raw usage information that is available.

In some embodiments, the raw usage information may be gathered in whole or in part by the operating system (OS) of the smart device itself which may thus constitute a smart device monitor 130. In some such embodiments, the OS may make such raw usage information directly available to the feature extraction device 130 via an application programmer interface (API) which as will be understood may operate according to push or pull protocols. In some embodiments, another process or app running on the smart device may gather some or all of the raw usage information through direct observation of user interaction with the app or by polling other raw usage information from the OS or other apps via respective APIs. For example, an OS API may provide an instantaneous view of the current network connection to another processor or app which may then compile a log of all network connection states seen over a time period. Various other approaches to compiling raw usage information will be apparent.

The feature extraction device 140 may be any device capable of extracting additional useful information from the raw usage information. This "extracted usage information" may be virtually any information that is not already included in the raw usage information (*e*.*g*., not already available through logging or observing OS states) but derivable therefrom. For example, a frequency of network switching, a median time spent in a particular text conversation, or a classification of a current call (*e*.*g*., important, casual, unwelcome). Such features may be obtained according to any approach including statistical algorithms or trained machine learning models.

In some embodiments, the feature extraction device 140 may be extensible post-deployment to change the features that are extracted. For example, the feature extraction device 140 may store one or more scripts, compiled instructions, or other items defining algorithms for feature extraction. The feature extraction device 140 may execute or interpret each such available item when extracting features and proved all resulting data downstream to the training set creation device 150 or prediction device 170. To modify which features are extracted, the set of these items may be modified, pruned, or supplemented.

The feature extraction device 140 provides both raw and extracted usage information (*i.e*., the features for use with one or more trained model, or at least a subset thereof) to the training set creation device 150 for training one or more models and to the prediction device 170 for application of the trained models for generating measures of the current contextual state of the user. The feature extraction device 140 may continually transmit the information (*e*.*g*., in a consistent stream or as is available) or may gather data for batch transmission at more spaced-out times. Where usage information from multiple time slots are to be sent in a batch, the feature extraction device 140 may aggregate and compress these features for transmission. The method of transmission need not be the same to both the training set creation device 150 and the prediction device 170. For example, the feature extraction device 140 may send aggregated and compressed sets of usage information to the training set creation device 150 every hour, but may send usage information immediately to the prediction device as the usage information becomes available. This may be particularly beneficial where the training set creation device 150 is located remotely from the feature extraction device 140 but the prediction device is local to or collocated in the same hardware as the feature extraction device 140.

The training set creation device 150 may be any device capable of constructing one or more training sets for training one or more machine learning models from received usage information, feedback, and any other useful contextual information. Thus, the training set creation device 150 may be implemented in, for example, the user's smart device or a remote server hosting a VM. It will be apparent that the operation of the training set creation device 150 and the arrangement of the produced training set(s) will be dependent on the machine-learning approaches and models employed by the predictive model training device 160. For example, where the predictive model training device 160 uses a supervised (or semi-supervised) learning approach, the training set creation device 150 may generate a labeled training set (*e.g*., wherein each feature set is paired with a label indicating a Boolean or numerical value representing the user's availability, receptiveness, *etc.* found or presumed to correspond to that feature set). To provide such labels, a human operator (*e*.*g*., the user or another operator) may review the feature set and manually provide these labels. Alternatively, the client application 110 may return such labels as feedback based on the actual observed user behavior after delivering a user interaction. In some embodiments, a semi-supervised approach may be followed rather than providing the labels directly. For example, one or more separately trained machine-learning models (*e.g*., a logistic regression model for each measure of contextual state) may be applied to the feature set or feedback information (which may constitute usage information or other information observed about the user before, during, or after user interaction delivery) to determine one or more labels (*e*.*g*., discretely or as a likelihood of each potential label being applicable) for each training example. Some useful feedback for labeling feature sets may include information describing how the user interacts with a delivered notification (or other initiated user interaction) (*e*.*g*., ignoring, reading for 2 seconds and dismissing, *etc.*), or the data transferred after a user interaction. Through application of such models, the training set creation device 150 may be able to determine whether and to what degree a user's behavior has changed in response to an initiated user interaction, thereby gauging the success of that user interaction.

In some embodiments, the training set creation device 150 may also prune old or non-personalized training examples from the training set as fresh, personalized examples are gathered. For example, when a client application device 110 first begins using the interruption service device 120 for a particular user, that user's models 172, 174 may be generated based on training examples drawn from the population at large or from a population that is demographically or otherwise similar to that user. As training examples specific to that user are gathered, the old examples may be phased out of the training set (or weighted comparatively less than the new examples) to provide more fully customized models. Similarly, personalized-yet-old training examples may also be phased out (or weighted comparatively less) in favor of newer training examples to account of changes in user behavior or attitude. The resulting labeled data set may then be provided to the predictive model training device 160.

The predictive model training device 160 may be any device capable of training one or more models based on a training set. For example, the predictive model training device 160 may be a mobile device or remote server. Various trained models and machine learning algorithms for providing measures of contextual states may be used. For example, the predictive model training device 160 may train a regression (linear or logistic) or neural network model using a version of gradient descent for analyzing the training set. Accordingly, the resulting model may include a set of learned weights (*e*.*g*., theta values) that can be transmitted to the prediction device 170 for application to current feature sets for real-time prediction of the user's contextual state.

The prediction device 170 may be any device capable of applying one or more trained models to incoming feature sets from the one or more feature extraction devices 140. The prediction device 170 may store one or more models received from the predictive model training device 160 (*e.g*., a receptiveness model 172 and an availability model 174). Upon receiving a feature set from the feature extraction device 140, the prediction device 170 applies the models 172, 174 to the feature sets (*e.g*., by inputting the features into the trained regression or neural network function) The outputs of the models 172, 174 (*e.g*., the contextual state measures) may then be provided to the interruption service device 120 for use in providing an opportunity indication to the client application device 110 in the manner described above.

It will be apparent that, while in various embodiments described herein some functional devices are described as coordinating with a smart device operating system (*e*.*g*., the smart device monitor 130), in other embodiments, one or more of the functional devices may be implemented as part of the operating system. For example, the smart device monitor 130 or feature extraction device 140 may operate as operating system components for reporting features to external devices/services (*e.g*., via an operating system API). As additional examples, all of the functional devices 110-170 or the real-time interruption service pipeline 130, 140, 170, 120 may be implemented as components of the operating system itself.

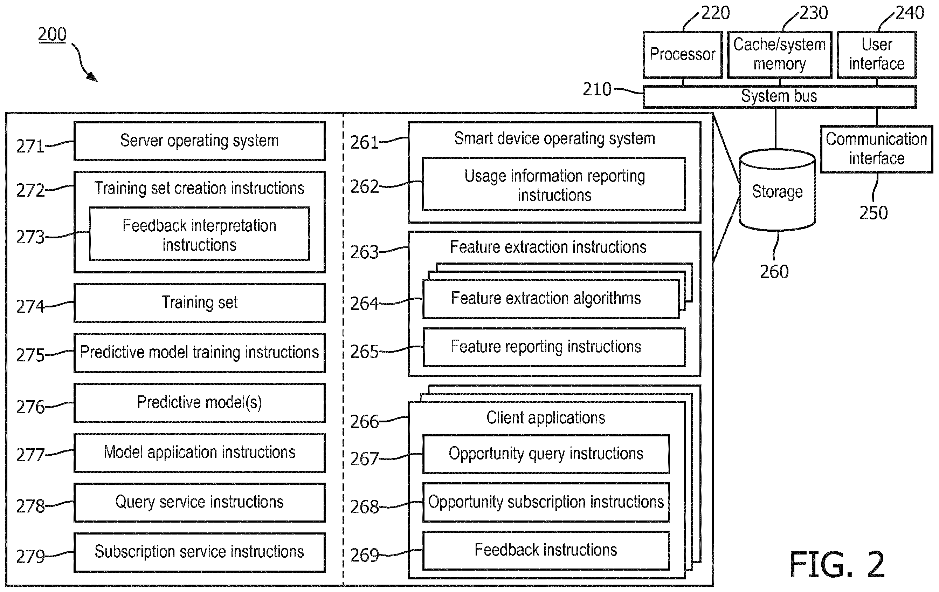

FIG. 2 illustrates an example of a hardware device 200 for implementing a system (or a portion thereof) for performing user interactions at opportune times. The hardware device 200 may implement one or more of the functional devices of FIG. 1 and, as such, may implement one of various devices such as a wearable device, a mobile phone, a tablet, or a server (*e.g*., a server running a virtual machine that implements the software processes described herein). As shown, the device 200 includes a processor 220, memory 230, user interface 240, network interface 250, and storage 260 interconnected via one or more system buses 210. It will be understood that FIG. 2 constitutes, in some respects, an abstraction and that the actual organization of the components of the device 200 may be more complex than illustrated. Further, while this example described various features as being implemented by a smart device and others by a server, it will be understood that this is merely an example embodiment. As noted above, the various functions may be distributed among one or more devices in many different arrangements; modifications to the software and storage 260 contents to enable such alternative arrangements will be apparent.

The processor 220 may be any hardware device capable of executing instructions stored in memory 230 or storage 260 or otherwise processing data. As such, the processor may include a microprocessor, field programmable gate array (FPGA), application-specific integrated circuit (ASIC), or other similar devices. It will be apparent that, in embodiments where the processor includes one or more ASICs (or other processing devices) that implement one or more of the functions described herein in hardware, the software described as corresponding to such functionality in other embodiments may be omitted.

The memory 230 may include various memories such as, for example L1, L2, or L3 cache or system memory. As such, the memory 230 may include static random access memory (SRAM), dynamic RAM (DRAM), flash memory, read only memory (ROM), or other similar memory devices.

The user interface 240 may include one or more devices for enabling communication with a user such as an administrator. For example, the user interface 240 may include a display, a mouse, and a keyboard for receiving user commands. In some embodiments, the user interface 240 may include a command line interface or graphical user interface that may be presented to a remote terminal via the communication interface 250.

The communication interface 250 may include one or more devices for enabling communication with other hardware devices. For example, the communication interface 250 may include a wired or wireless network interface card (NIC) configured to communicate according to the Ethernet protocol. Additionally, the network interface 250 may implement a TCP/IP stack for communication according to the TCP/IP protocols. Additionally or alternatively, the communication interface 250 may include hardware for communication with nearby devices such as hardware for communication according to NFC, Bluetooth, Wi-Fi or other local wireless or wired protocols. Various alternative or additional hardware or configurations for the communication interface 250 will be apparent.

The storage 260 may include one or more machine-readable storage media such as read-only memory (ROM), random-access memory (RAM), magnetic disk storage media, optical storage media, flash-memory devices, or similar storage media. In various embodiments, the storage 260 may store instructions for execution by the processor 220 or data upon with the processor 220 may operate.

For example, where the device 200 implements a user's smart device (*e.g*., a mobile phone or tablet) the storage 260 may store a smart device operating system 261 for controlling various basic operations of the hardware 200. For example, the smart device operating system 261 may provide an environment for executing and interacting with client applications, managing various network connectivity, enabling phone and messaging communication, *etc.* In the embodiment shown, the smart device operating system 261 includes usage information reporting instructions 262 for providing various information describing the usage of the smart device by a user (such as one or more of the metrics described above). Thus, in this example embodiment, the OS implements the smart device monitor 130 of FIG. 1. Feature extraction instruction 263 may implement the feature extraction device 140 and, as such, may include instructions for extracting one or more features 264 and instructions for reporting those features 265 (*e*.*g*., periodically or in real time) to the devices implementing the training set creation device 150 or prediction device 170.

The smart device may also host and execute one or more client applications 266 (which may implement the client application device 110 of FIG. 1) that are interested in utilizing opportunity indications for determining when to initiate a user interaction (as deemed desirable for initiation due to the independent purposes and operation of said client apps). Thus, one or more of the client application 266 may include opportunity query instructions 267 for querying (*i.e*., a pull request) the interruption service device 120 or opportunity subscription instructions 268 for requesting updates (*i.e*., a push request) from the interruption service device 120. For example, a client application 266 may wish to display a message to a user suggesting that the user go for a run. Before displaying the message, the client application 266 may, via the opportunity query instructions 267, query the interruption service device 120 and learn that the user is not currently available to act on such a user interaction. In response, the client application 266 may queue the message for later delivery and, via the opportunity subscription instructions 268, request that the interruption service device 120 inform the client application 266 when the user becomes available. Later, upon receiving such an update, the client application 266 may output the message to the user (*e.g*., via a notification service of the smart device operating system 261). The client applications 266 may also include feedback instructions 269 for reporting to the training set creation device 150 whether a user was found to be available/receptive/ *etc*. to a user interaction (or usage or other feedback information useful in drawing such a conclusion).

Where the device 200 implements a supporting server, the storage 260 may store a server operating system. In some embodiments wherein the server is deployed in a cloud computing architecture, the server operating system may include a hypervisor for coordinating one or more virtual machines which, in turn, may include additional instructions and data 272-279. Training set creation instructions 272 may implement the training set creation device 150 and, as such, may receive feature sets from the feature reporting device 130 and create new training examples therefrom, forming a training set 274. Feedback interpretation instructions 273 may interpret feedback from the client application device 110 or other sources (*e*.*g*., using a trained feedback interpretation model, not shown) to label the training examples for use in training the predictive models.

Predictive model training instructions 275 may implement the predictive model training device 160 and, as such, may train one or more predictive models 276 based on the training set 274 or portions thereof. For example, the predictive model training instructions 275 may implement a form of gradient descent to learn one or more theta weight values for instantiating a regression or neural network (including deep learning) predictive model 276. With the trained models 277, the model application instructions 277 may implement the prediction device 170 by receiving features from the feature extraction device 140 then applying the model(s) 276 to obtain one or more measures of the user's contextual state. The query service instructions 278 or subscription service instructions may then implement the interruption service device 120 by providing opportunity indications (*e*.*g*., "available," "receptive but not available" or the contextual state measures themselves) to the client application device 110 in a pull or push manner, respectively.

It will be apparent that various information described as stored in the storage 260 may be additionally or alternatively stored in the memory 230. In this respect, the memory 230 may also be considered to constitute a "storage device" and the storage 260 may be considered a "memory." Various other arrangements will be apparent. Further, the memory 230 and storage 260 may both be considered to be "non-transitory machine-readable media." As used herein, the term "non-transitory" will be understood to exclude transitory signals but to include all forms of storage, including both volatile and non-volatile memories.

While the host device 200 is shown as including one of each described component, the various components may be duplicated in various embodiments. For example, the processor 220 may include multiple microprocessors that are configured to independently execute the methods described herein or are configured to perform steps or subroutines of the methods described herein such that the multiple processors cooperate to achieve the functionality described herein. Further, where the device 200 is implemented in a cloud computing system, the various hardware components may belong to separate physical systems. For example, the processor 220 may include a first processor in a first server and a second processor in a second server.

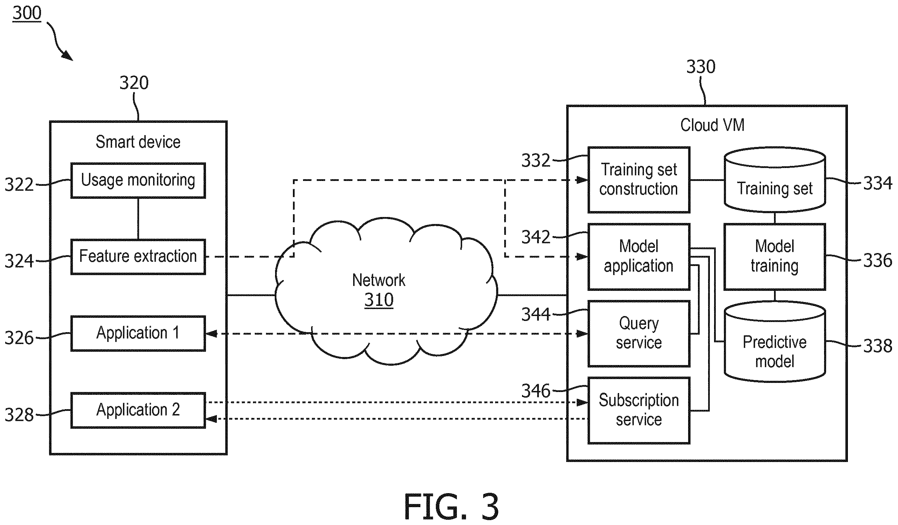

FIG. 3 illustrates a first embodiment of a system 300 for performing user interactions at opportune times. The system 300 may include a network 310 (such as a carrier network, LAN, cloud network, Internet, or combinations thereof) interconnecting a smart device 320 (such as a mobile phone or tablet) to a cloud virtual machine server 330. The system 300 may constitute an implementation of the functional system 100 of FIG. 1; specifically, as shown, the smart device 320 may constitute two client application devices 110, a smart device monitor 130, and a feature extraction device 140, while the cloud VM 330 may constitute the training set creation device 150, predictive model training device 160, prediction device 170, and interruption service device 120.

As shown, the smart device 320 includes a usage monitoring process 322 for performing usage monitoring (*e*.*g*., within or via an API of the smarty device OS) and a feature extraction process 324 for extracting additional features from the raw usage information gathered by the usage monitoring process 324 (*e.g*., within or via an API of the smarty device OS). The smart device 320 transmits the relevant usage information features (whether raw or extracted) to the cloud VM 330, where a training set construction process 332 commits the features as one or more new training examples in the training set 334. Whether these records are initially unlabeled, the training set construction process 332 may subsequently label the examples once sufficient feedback is obtained to discern an appropriate label. A model training process 336 may then use the training set 334 (immediately or at a later time) to create or update one or more predictive models 338 as described above.

Meanwhile, the model application process 342 applies the ten-current version of the predictive model 338 to the incoming feature set to determine one or measures of the user's contextual state an makes this information available to the query service 344 and subscription service 346 processes. Client application 1 326 would like to initiate a user interaction and transmits a query to the query service 344. In response, the query service 344 transmits an opportunity indication back to the client application 1 326 based on the measure(s) provided by the model application process 342. The client application 1 326 may then use this indication to determine whether or not it is an opportune time to initiate the user interaction. If the user interaction is initiated, the client application 1 326 may then report feedback back to the training set construction process 332.

The client application 2 328, on the other hand, may have previously indicated to the subscription service process 346 a desire to receive push notifications about updates to the user availability. For example, the client application may subscribe to all changes to the opportunity indication or to any changes of the opportunity indication to a defined value or group or range thereof. Upon a change to the opportunity indication based on the measure(s) reported by the model application process 342, the subscription service 346 may then push the new opportunity indication to the client application 2 328. The client application 2 328 may then use this indication to determine whether or not it is an opportune time to initiate the user interaction. If the user interaction is initiated, the client application 2 328 may then report feedback back to the training set construction process 332.

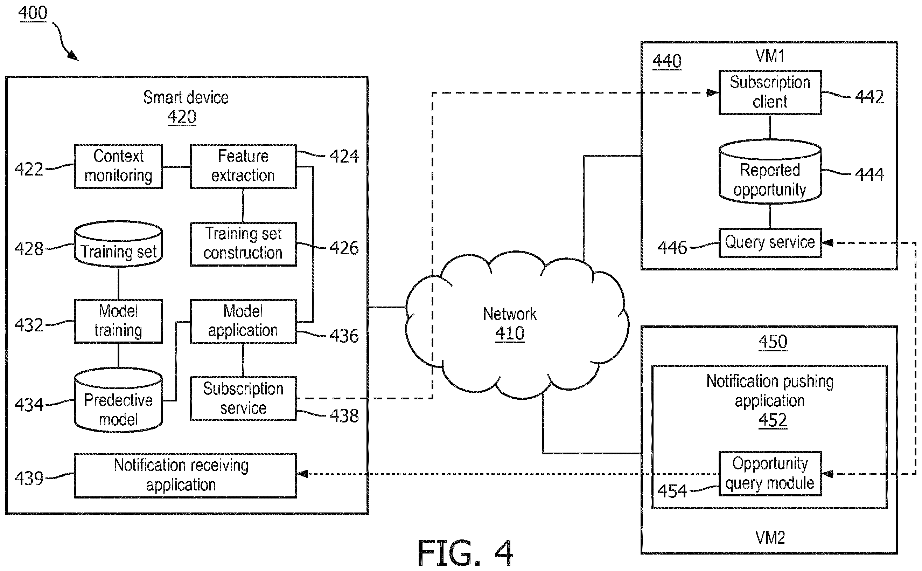

FIG. 4 illustrates a second embodiment of a system 400 for performing user interactions at opportune times. The system 400 may include a network 410 (such as a carrier network, LAN, cloud network, Internet, or combinations thereof) interconnecting a smart device 420 (such as a mobile phone or tablet) to a cloud virtual machine server 430. The system 300 may constitute an implementation of the functional system 100 of FIG. 1; specifically, as shown, the smart device 420 may constitute a smart device monitor 130, a feature extraction device 140, a training set creation device 150, a predictive model training device 160, a prediction device 170, and an interruption service device 120; VM1 440 may constitute a client application device 110 and another interruption service device 120; and VM2 450 may constitute another client application device.

As shown, in this second embodiment, the majority of the functional devices are embodied in the smart device 420 itself. A context monitoring process 422 gathers raw usage data and a feature extraction process 424 extracts additional features therefrom. A training set construction process 426 uses these features and feedback information to create a training set 428 from which a model training process 432 creates one or more predictive models 434 for determining one or more measures of a user's current contextual state (*e.g*., availability and receptiveness). A model application process 436 applies the model(s) 434 to the new feature set to determine these measures and, then, a subscription service process 438 forwards an opportunity indication based on these measures to the VM1 440 which had previous subscribed to receive push notifications for changes to opportunity indications.

The VM1 440 is established as an intermediary between the smart device 420, which determines the user's contextual state periodically, and VM2 450, which hosts an client application 452 that pushes notifications (or other user interactions) to a notification receiving app (or OS module) 439 running on the smart device 420. For example, the notification pushing application 452 may be a server side of a coaching service, while the notification receiving application 439 may be a client side (*e.g*., dashboard or message center) of the coaching service. The intermediary VM1 440 may subscribe to opportunity indication updates from the smart device 420 and provide such opportunity indications to the VM2 450 as requested. Thus, the VM1 440 provides the VM2 450 with a query service for determining opportune times for user interaction without requiring the smart device 420 to provide such on-demand availability. In some embodiments, the VM1 440 may receive updates from multiple smart devices 420 or for multiple users and provide a single point of query for VM2 450 or other servers hosting client applications. As such, the VM1 440 includes a subscription client process 442 that receives opportunity indications from the smart device 420, memory dedicated to storing reported opportunity indications 444, and a query service process 446 for forwarding these opportunity indications to the VM2 450 upon request. As noted above, the VM2 450 includes a notification pushing application 452 which, itself implements an opportunity query software module 454. For example, the opportunity query module 454 may handle requesting opportunity indications at the request of other portions of the application 452 code according to the appropriate procedures and formats required by an API of the query service 446.

It will be understood that the examples of FIGS 3-4 are merely two possible instantiations of the functional system of FIG. 1 and that many more arrangements are possible within the scope of that example system 100. For example, a third embodiment may locate a smart device monitor 130 on a wearable device (*e.g*., a wearable wristwatch device with an accelerometer and pulse sensor); another smart device monitor 130, a feature extraction device 140, a prediction device 170, an interruption service device 120, and a client application device 110 on a mobile phone; and a training set creation device 150 and predictive model training device 160 on a remote server. In such an embodiment, only the relatively resource intensive operations of training set labeling and predictive model training are "outsourced" from the mobile phone to a remote server. Various additional embodiments will be apparent. In yet another embodiment, the second embodiment may be modified to move the opportunity query module 454 onto the smart device 420. In such an embodiments, the notification pushing application 452 may push a notification to the notification receiving application 439, which may then perform the query to determine whether or when to present the received notification to the user. In variations of such an embodiments, the query may be to the query service 446 on the remote VM1 440 or may be performed locally at the smart device 420 (*e.g*., by implementing the query service 446 in the smart device 420 as well).

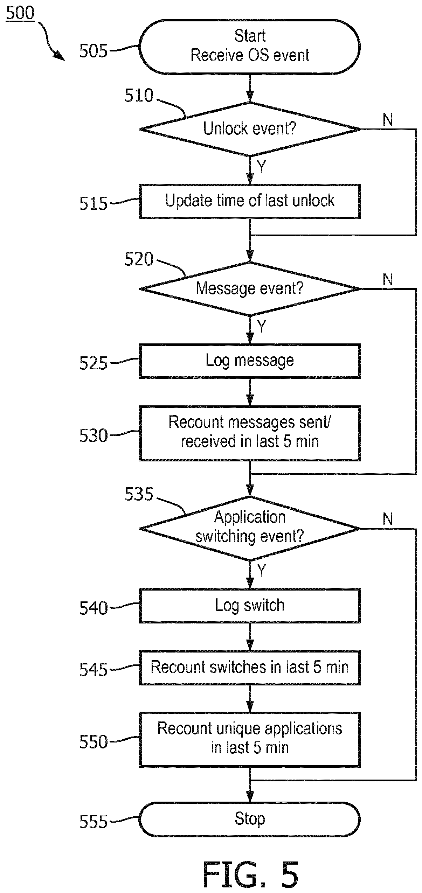

FIG. 5 illustrates an example of a method 500 for gathering usage information from a device operating system. The method 500 may correspond to operations performed by the smart device monitor 130 for gathering raw usage information where the raw information is only transiently provided by the underlying OS (or from elsewhere). In some embodiments, the method 500 (or a method similar thereto) may be performed by the usage information reporting instructions 262, whether implemented as part of the operating system 261 or as another app (*e.g*., together with the feature extraction instructions 263). The method 500 illustrates the gathering of 6 different types of raw usage information. Various other additional or alternative raw usage information and methods for gathering such raw usage information from the information available from the OS, apps, or other sources will be apparent. It will further be apparent that in other embodiments, some of these (or other) types of raw usage information may be provided directly by the OS, apps, or other sources. For example, in some embodiments, the OS may through normal operation provide a log of received and sent messages to the method 500 via an API. In other embodiments, the method 500 may be implemented by the OS itself and may interface with other OS modules, apps, and other sources to gather raw usage information. Various modifications to the method 500 to enable these alternative embodiments will be apparent.

The method 500 begins in step 505 where the method receives an indication of one or more OS events (*e*.*g*., via an event bus provided by the OS). In step 510, the method 500 determines whether the received event indicates that the user has unlocked their phone. The specific approach to determining what information a received event conveys will be specific to the OS with which the method 500 interacts; specific steps for implementing this decision 510 (and subsequent decisions) will be apparent in view of the OS. If the event does relate to an unlock event, the method 500 proceeds to step 515 where the device updates a tracked variable storing the time of the last device unlock.

Next, in step 520, the device determines whether the OS event indicates that a message (*e.g*., a text or multimedia message) has been sent or received. If so, the device logs the message 525 (*e.g*., the message content, time, sender, or recipient) and updates a running count of the messages received in the last 5 minutes (or some other useful time window) by referring to the message log created through successive executions of step 525. Both the message log and the count may be stored for later use as features or for extracting additional features therefrom. In step 535 the device determines whether the OS event indicates that the user has switched to a different application. If so, the device logs the switch (*e.g*., the time, previous application, and new application) in a running log in step 540, recounts the number of application switches in the preceding 5 minutes (or other time window) in step 545, and recounts the number of application switches initiated by the user in the preceding 5 minutes (or other time window) in step 545, and recounts the number unique applications activated by the user in the preceding 5 minutes (or other time window) in step 550. The switch log and the counts may be stored for later use as features or for extracting additional features therefrom. The method 500 may then proceed to end in step 555.

It will be apparent that method 500 is merely one example of a method for gathering raw usage information and that various alternative approaches may be followed. For example, in some embodiments, a dedicated algorithm may be defined for each type of OS events or multiple groupings thereof. For example, upon registering with an event bus for each type of OS event, the device may register a dedicated algorithm for processing that type of OS event. As such, the event bus in effect does the work of steps 510, 520, 535 because only the algorithm for processing the specific OS event is called.

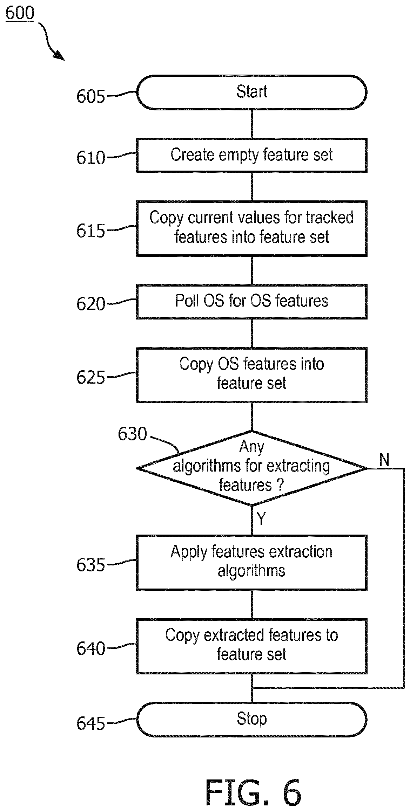

FIG. 6 illustrates an example of a method 600 for generating a feature set for use in predictive model training or application. The method 600 may correspond to operations performed by the feature extraction device for extracting usage information and gathering both raw and extracted usage information into a feature set to be used by one or more predictive models. In some embodiments, the method 600 may correspond to the feature extraction instructions 263 or feature reporting instructions 265. The method 600 may be performed at various times such as, for example, periodically or immediately after execution of method 500.

The method 600 begins in step 605 (*e.g*., based on execution as a schedule task configured to occur periodically) and proceeds to step 610 where the device creates an empty feature set data object. In step 615, the device copies any current values for raw usage information that has been tracked by monitoring the OS or other sources (*e*.*g*., according to method 500 or a method similar thereto.) into the empty feature set. For example, the time of the last unlock, a message log, and an application log may be copied into the feature set. Next, in step 620, the device polls the OS for any raw usage information to be used as features that are directly available from the OS (or other app or other source). For example, the OS may be able to provide information such as the current connection information (*e*.*g*., network, data usage) or current device status. This information may then also be copied into the feature set in step 625.

In step 630, the device determines whether there are any algorithms available to be applied for extracting features from the usage information that is present. For example, the device may store a collection of scripts, JAR files, *etc.* that are to be executed in sequence for each feature set. Various alternatives, such as simply coding the feature extraction into the method 600 itself are also possible. If there are feature extracting algorithms to apply, each of these are performed (*e*.*g*., called as functions or executed as scripts) in step 635 and the results thereof are copied into the feature set in step 640. The method then proceeds to end in step 645. The features may then be transmitted to the training set creation device 150 or prediction device 170 at some point in the future or as a final step (not shown) before the method 600 ends in step 645. In some embodiments the device ay gather multiple feature sets (*e.g*., a new feature set every 5 minutes) and transmit them together as a batch to one of the other device (*e*.*g*., every hour or other time period, or on request by the other device). The transmission schedule need not be the same for transmitting to the training set creation device 150 and prediction device 170. For example, the feature extraction device 140 may transmit batches of features to the training set creation device on an hourly basis but may transmit each new feature set to the prediction device as it becomes available to enable the most up-to-date opportunity indications. Various other modifications will be apparent.

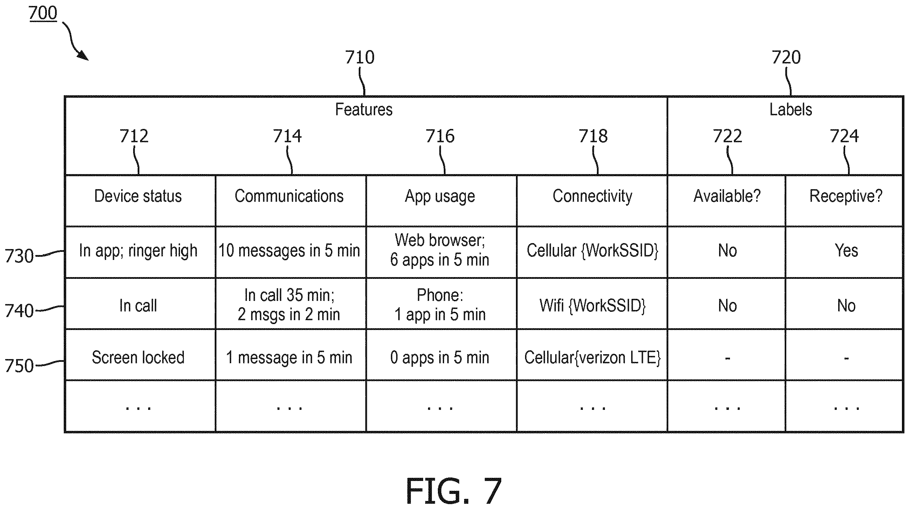

FIG. 7 illustrates an example of a training set 700 for training one or more predictive models. This training set 700 may correspond to the training set 274 and may be created by a training set creation device 150 from reported feature sets and feedback. As shown, the set includes multiple labels and, as such, may be used for training multiple predictive models (*e.g*., a receptiveness model and an availability model). It will be understood that various alternative arrangements for storing one or more training sets may be used. For example, in some embodiments, separate training sets may be established for each model to be trained. Such training sets may include different labels or different features sets (*e.g*., with no features in common or only some overlap in features included). Alternatively, in some embodiments, the training set 700 may not be labeled (*e.g*., for unsupervised or semi-supervised learning) or labels may be stored in a different data structure from the features. Additionally, the underlying data structure for storing the data set may not be a table and may take on various other forms such as, for example, an array, a list, a tree, or other data structure. Additional fields for features, labels, or other information (*e*.*g*., a time stamp which in some embodiments may also be used as a feature or features derived therefrom such as time of day) will be apparent.

As shown, the training set 700 includes a set of features 710 and a set of labels 720. The set of features 710 may include various fields for storing reported features for each training example. As an example, the training set 700 includes a device status field 712 for storing a then-current device status, a communications field 714 for storing information about communications (*e*.*g*., calls and text messages) engaged in by the user, an app usage field 716 for storing information about the apps used by the user, and a connectivity field 718 for storing then-current connection information of the device. The labels 720 include an available field 722 for storing a label of whether the user was deemed "Available" to physically engage user interaction and a receptive field 724 for storing a label of whether the user was deemed "Receptive" to mentally engaging with a user interaction. While Boolean labels are shown (and may be useful for training logistic regression models), in other embodiments, numerical values may be provided as labels of these two measures (*e.g*., for use in training a linear regression model). These numerical values may correspond to a probability that the label applies or a degree to which the label applies (*e.g*., an availability of 100 may indicate that the user can go for a jog now, while an availability of 20 may indicate that the user can't go for a jog but can take a brief walk around the office). It will also be apparent that various alternative measures may be provided. For example, availability may be broken down into multiple labels that each correspond to a different type, grouping, or degree of physical activity for which the user is available, thereby enabling the training of a different models for each of multiple degrees of availability, receptiveness, or other measures of a user's contextual state. Virtually any of the approaches to training set creation, model training, and model application described herein with respect to the predictive models may also be employed to enable operation of the labeling models.

As an example, training example 730 indicates that for a specific feature set (including connection to a WiFi access point called "Work SSID" and currently using the "Web Browser App"), the user was judged to be receptive to incoming user interactions but not available to act on them immediately. Training example 740 may indicate that for a different feature set (including the user currently being in a call that has lasted 35 minutes so far) the user has been judged to be neither receptive nor available for receiving a user interaction. A third training example stores another reported feature set (including that the device is currently locked and no apps have been used in the last 5 minutes) has yet to be labeled. After feedback information has been received, the training set creation device 150 may return to this example 750 to provide labels. For example, where the feedback is manual input from the user, another human user, or the client application the feedback may include the label itself to be attached to the example 750. Where the feedback is subsequent usage information or other information that does not already include the label, the training set creation device 150 may interpret the feedback to generate the label(s) for attachment to the example 750. For example, the training set may include a trained model (*e.g*., a regression model or neural network) for each potential label that is applied to the features in the data structure or the received feedback to determine whether each respective label applies to an example, These labeling models, not to be confused with the predictive models applied by the prediction device 170, may be trained based on yet another training set (not shown) that may have been manually labeled by a human user. Various learning approaches, such as a version of gradient descent, may be applied to achieve such training.

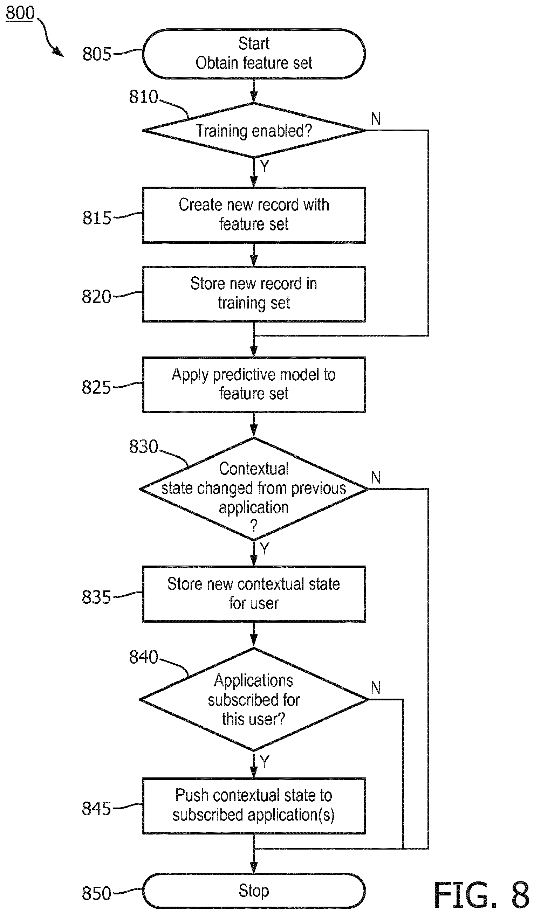

FIG. 8 illustrates an example of a method 800 for processing feature sets to create training examples and generate contextual state predictions. The method 800 may correspond to operations performed by the training set creation device 150, prediction device 170 and interruption service device 120. In some embodiments, the method 800 may correspond to the training set creation instructions 272, model application instructions 272 or query service instructions 278. It will be apparent that various alternative approaches may be implemented; for example, in some embodiments separate and distinct algorithms may be defined for updating a training set and applying a predictive model.

The method 800 begins in step 805 (*e.g*., in response to obtaining a new feature set from a feature extraction device or based on a scheduled task) and proceeds to step 810 where the device determines whether training is currently enabled for the user associated with the received feature set (for example, in some embodiments, training may be turned off at times when the predictive models are deemed to be sufficiently trained to conserve memory and processing resources). If training is turned off, the method 800 may skip ahead to step 825; otherwise, the device creates a new record of a training example that stores the received feature set and stores the new training example as part of the existing training set. As will be understood, the feature set may be obtained from various sources depending on the device that is executing the instructions. Obtaining may include receiving the feature set from another device (*e*.*g*., where the feature extraction device 140 and prediction device 170 are implemented in physically separate devices) or receiving the feature set from another local process (*e.g*., via sockets or shared memory) (*e.g*., where the feature extraction device 140 and prediction device 170 are implemented as separate processes or OS modules in the same device).

In step 825, the device applies one or more predictive models to the received feature set to obtain one or more measures of the user's current contextual state. In step 830, the device determines whether the determined contextual state is different from the previously determined contextual state (*e.g*., if the user is now available where previously unavailable, or if receptiveness has decreased from a value of 60 to 20) and, if so, proceeds to step 835 where the device stores the determined contextual state as the current contextual state (potentially overwriting the previous contextual state).

In step 840, the subscription service device determines whether any client applications had previously subscribed to updates about this user and, if so, pushes the new contextual state to the subscribed applications in step 845. This approach may be sufficient for embodiments wherein client applications simply subscribe to all updates. In other embodiments wherein client applications may specify one or more criteria for when an update should be pushed (*e*.*g*., when the user becomes available, when receptiveness or availability increases, or when receptiveness is at least 50), an additional conditional blocks may be implemented between steps 840 and 845 to determine which client applications' criteria have been met to determine to which client applications the update will be pushed. The method then proceeds to end in step 850.

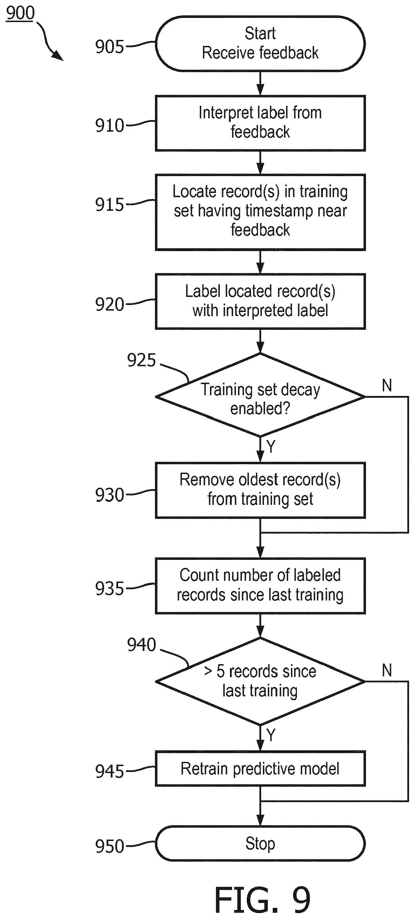

FIG. 9 illustrates an example of a method 900 for updating a predictive model based on received feedback. The method 900 may correspond to operations performed by the training set creation device 150 and predictive model training device 160. In some embodiments, the method 900 may correspond to the training set creation instructions 272 (or the feedback interpretation instructions 273), or predictive model training instructions 275. It will be apparent that various alternative approaches may be implemented; for example, in some embodiments separate and distinct algorithms may be defined for updating a training set and training a predictive model.

The method begins in step 905 (*e.g*., in response to receiving feedback information or based on a scheduled task) and proceeds to step 910 where the device interprets one or more labels from the received feedback. For example, step 910 may include simply reading a manually provided label from the feedback or applying a separate trained model (*e.g*., a classification model such as logistic regression) to the feedback (and, in some embodiments, features stored in the relevant training records to be labeled). In step 915, the device may locate any records that are contemporary to the feedback (*e*.*g*., based on timestamps of when the features sets stored therein were created or received). In some embodiments, only as-yet unlabeled training examples may be located in the step while in other embodiments, both unlabeled and labeled examples may be obtained so as to update the previously labeled examples based on the additional feedback. In step 920, the device labels each retrieved training example record in accordance with the interpreted label(s).

In step 925, the device may determine whether training set decay is enabled. For example, in some embodiments, old training examples may be pruned from the training set (at least with respect to the user to which the current feedback applies) as new records are added. This may be particularly useful where a general training set based on examples drawn from a population of users is used at first and gradually supplemented and replaced with examples created based on the specific user, thereby personalizing operation of the system to the user's behaviors and habits. If decay is enabled, the device removes the oldest records from the training set in step 935 (*e.g*., by deleting them or flagging them as not to be used for training models for the current user). In some embodiments, one old training example may be removed for each new training example when decay is enabled, although other proportions are possible.

In step 935, the device determines how many new records have been added (or how many records have been labeled) since the last time the predictive model(s) were trained. If this number exceed 5 (or some other threshold deemed appropriate), the method 900 proceeds to step 945 to retrain the predictive model(s) on the current iteration of the training set. Various alternative methods for identifying appropriate times for model retraining, such as retraining the models at scheduled times, will be apparent, The method 900 then proceeds to end in step 950.

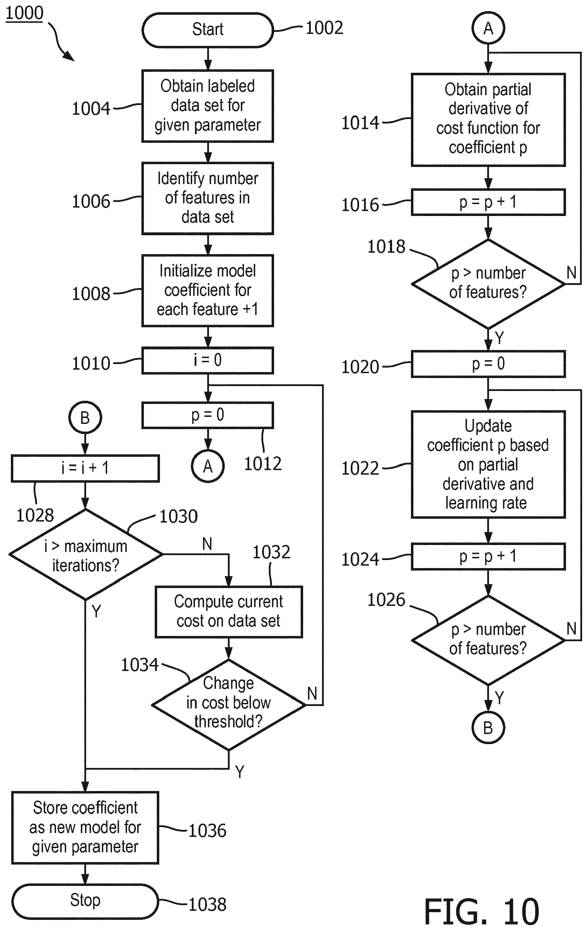

FIG. 10 illustrates an example of a method 1000 for training a model. The method 1000 may correspond to operations performed by the predictive model training device 160 and may be implemented by the predictive model training instructions 275. Various alternative approaches to model training will be apparent such as, for example, programmer-defined algorithms, neural networks, Bayesian networks, etc.

The method begins in step 1002 and proceeds to step 1004 where the device obtains a labeled data set (*e.g.*, the training set 700 for training a predictive model or another training set (not shown) for training a labeling model) for a given parameter for which a model is to be created. Various alternative approaches for training a model from an unlabeled training set will be apparent. In various embodiments, the training set may include a number of records of training examples that specify one or more features (*e.g*., various usage information or feedback information as described above, *etc*.) and the appropriate conclusion to be drawn from that feature set.

In step 1006, the device identifies the number of features identified in the data set (or, where the model does not utilize every feature in the data set, the number of features relevant to the model being trained) and, in step 1008, initializes a set of coefficients to be used in the resulting model. According to various embodiments, a coefficient is created for each feature along with one additional coefficient to serve as a constant. Where the model is being trained to output a numerical value, a linear regression approach may be utilized, wherein the final model function may take the form of $h \left(X\right) = {θ}_{0} + {θ}_{1} {x}_{1} + {θ}_{2} {x}_{2} …$ where X is the set of features {x₁, x₂, ...} and the coefficients {θ_{0,} θ₁, θ₂, ...} are to be tuned by the method 1100 to provide as output an appropriate relevance estimation, consistent with the trends learned from the training data set. In some embodiments the final model function may incorporate a sigmoid function as follows: $h \left(X\right) = \frac{1}{\left(1+{e}^{- h \left({θ}_{0}+{θ}_{1}{x}_{1}+{θ}_{2}{x}_{2}…\right)}\right)}$ where tuning of the coefficients results in the function h(X) outputting a value between 0 and 1 that serves as an estimation of the relevance of an offering. According to various embodiments, the coefficients are all initialized to values of zero. It will be apparent that in some embodiments, additional features for inclusion in h(X) (and associated coefficients) may be constructed from the features in the training set such as, for example, x₁² or x₁x₂.

The method begins to train the coefficients by initializing two loop variables, i and p, to 0 in steps 1010, 1012 respectively. Then, in step 1014, the device obtains a partial derivative of the cost function, J(θ), on the current coefficient, θₚ, where the cost function may be defined in some embodiments as $J \left(θ\right) = \frac{1}{2} \left({\sum }_{j = 1}^{m} {\left({h}_{θ}\left({x}^{\left(j\right)}\right)-{y}^{\left(i\right)}\right)}^{2}\right)$ where m is the number of training examples in the training data set, h_{θ}(x) is the trained function using the current coefficient set θ, x^{(j)} is the set of features for the j^{th} training example, and y^{(j)} is the desired output (*i.e*., the label) for the j^{th} training example. Thus, following a batch gradient descent approach, the partial derivative on coefficient p (θₚ) may be ${\sum }_{j = 1}^{m} \left({y}^{\left(i\right)}-{h}_{θ}\left({x}^{\left(j\right)}\right)\right) {x}_{p}^{\left(j\right)}$ where xp^{(j)} is the p^{th} feature in the j^{th} training example (or when p=0, xₚ^{(j)}=1).

In step 1016, the device increments p and, in step 1018, the device determines whether all coefficients have been addressed in the current loop by determining whether p now exceeds the total number of features to be included in h(X). If not, the method loops back around to step 1014 to find the next partial derivative term.

After all partial derivatives are found for the current iteration, the method 1000 proceeds to reset the loop variable p to zero in step 1020. Then, in step 1022, the device updates the p^{th} coefficient, θₚ, based on the corresponding partial derivative found in step 1114 and based on a preset learning rate. For example, the device may apply the following update rule: ${θ}_{p} = {θ}_{p} + α ∗ {\sum }_{j = 1}^{m} \left({y}^{\left(i\right)}-{h}_{θ}\left({x}^{\left(j\right)}\right)\right) {x}_{p}^{\left(j\right)}$ where α is a learning rate such as, for example, 0.1, 0.3, 1 or any other value appropriately selected for the desired rate of change on each iteration.

In step 1024, the device increments p and, in step 1026, the device determines whether all coefficients have been addressed in the current loop by determining whether p now exceeds the total number of features to be included in h(X). If not, the method loops back around to step 1022 to update the next coefficient. Note that according to the method 1000, all partial derivatives are found in a first loop prior to actually modifying the coefficients in a second loop so that the partial derivatives are not taken based on the partially updated values. Other embodiments may not implement such a "simultaneous" update of the coefficients.

After all coefficients are updated, the method proceeds to step 1028 where the variable i is incremented. In step 1030, the device determines whether i now exceeds a predefined maximum number of iterations to ensure that the method 1000 does not loop indefinitely. A sufficiently high maximum number of iterations may be chosen such as 1000, 5000, 100000, *etc.* If the maximum iterations has not been reached, the method 1000 proceeds to step 1032 where the device computes the current cost, using the cost function J(θ), based on the training set. In step 1034, the device determines whether the function h(X) has converged to an acceptable solution by determining whether the change in the cost from the last iteration to the present iteration fails to meet a minimum threshold. If the change surpassed the threshold the method loops back to step 1012 to perform another coefficient update loop. If, on the other hand, the maximum iterations is reached or the cost change is below the minimum threshold, the method 1000 proceeds to step 1036, where the device stores the coefficients as part of the new model for extracting the parameter and the method 1000 proceeds to end in step 1038.

It will be apparent that, in addition to following approaches other than regression, other embodiments may utilize different methods for tuning coefficients in a regression approach other than batch gradient descent. For example, some embodiments may use stochastic gradient descent, wherein each coefficient update is performed based on a single training example (thereby removing the summation from the partial derivative), and the method additionally iterates through each such example. In other embodiments, the normal equations for regression may be used to find appropriate coefficients, using a matrix-based, non-iterative approach where the set of coefficients is computed as $θ = {\left({X}^{T}X\right)}^{- 1} {X}^{T} y$ where X is a matrix of features from all training examples and y is the associated vector of labels.

According to the foregoing, various embodiments provide a means for client applications to determine opportune times for initiating user interactions. By monitoring smart phone or other device usage, an operating system or other service may identify times when a user is open to receiving various types of interactions. Further, by training different machine learning models for different types of opportunity (*e*.*g*., mental vs. physical opportunity, or gradations thereof), the identification of opportune times for interaction can be further tuned to the specific type, format, medium, or content of the user interaction proposed or desired to be initiated by a client application. Various additional benefits will be apparent in view of the foregoing.

It should be apparent from the foregoing description that various example embodiments of the invention may be implemented in hardware or firmware. Furthermore, various exemplary embodiments may be implemented as instructions stored on a machine-readable storage medium, which may be read and executed by at least one processor to perform the operations described in detail herein. A machine-readable storage medium may include any mechanism for storing information in a form readable by a machine, such as a personal or laptop computer, a server, or other computing device. Thus, a machine-readable storage medium may include read-only memory (ROM), random-access memory (RAM), magnetic disk storage media, optical storage media, flash-memory devices, and similar storage media.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in machine readable media and so executed by a computer or processor, whether or not such computer or processor is explicitly shown.

Although the various exemplary embodiments have been described in detail with particular reference to certain exemplary aspects thereof, it should be understood that the invention is capable of other embodiments and its details are capable of modifications in various obvious respects. As is readily apparent to those skilled in the art, variations and modifications can be affected while remaining within the scope of the invention. Accordingly, the foregoing disclosure, description, and figures are for illustrative purposes only and do not in any way limit the invention, which is defined only by the claims.

## Claims

1. A method performed by a prediction device (170) for determining an opportune time for user interaction, the method comprising:
receiving a request from a client application (110, 266) for an indication of whether a user is open to participate in a user interaction;
obtaining usage information regarding the user's recent activity on a user device (320, 420);
applying at least one trained predictive model (172, 174, 276, 338, 434) to the usage information to identify the user's current contextual state, wherein the current contextual state comprises at least one of:
an availability measure representative of the user's current ability to perform a physical action associated with the user interaction, and
a receptiveness measure representative of the user's current ability to pay attention to the user interaction;
determining an opportunity indication based on the user's contextual state;
providing the opportunity indication to the client application; and
subsequent to providing the opportunity indication to the client application:
obtaining feedback information regarding the user's reaction to the client application;
discerning from the feedback information a label regarding at least one of availability and receptiveness of the user;
generating a training example by associating the label with the usage information;
updating an existing training set (274, 334, 428) by at least adding the training example to the existing training set to generate an updated training set; and
retraining the at least one trained predictive model based on the updated training set.

2. The method of claim 1, wherein the opportunity indication comprises the current contextual state.

3. The method of claim 1, wherein at least part of the usage information is obtained via an operating system application programmer interface, API, of the user device.

4. The method of claim 1, wherein the steps of receiving, obtaining, applying, determining, and providing are performed by a processor (200) of the user device.

5. The method of claim 1, further comprising:
receiving the at least one trained predictive model from a remote predictive model training device.

6. The method of claim 1, wherein the step of discerning comprises applying a trained feedback interpretation model to the feedback information to receive the label.

7. The method of claim 1, wherein the feedback information describes the user activity on the user device subsequent to providing the opportunity indication to the client application.

8. The method of claim 7, wherein the step of discerning comprises analyzing the feedback information together with the usage information to determine whether the user changed their usage behavior.

9. A prediction device (170) for determining an opportune time for user interaction, the prediction device comprising:
a memory configured to store at least one trained predictive model (172, 174) for identifying a user's current contextual state, wherein the current contextual state comprises at least one of:
an availability measure representative of the user's current ability to perform a physical action associated with the user interaction, and
a receptiveness measure representative of the user's current ability to pay attention to the user interaction; and
a processor in communication with the memory, the processor being configured to:
receive a request from a client application for an indication of whether a user is open to participate in a user interaction;
obtain usage information regarding the user's recent activity on a user device;
apply the at least one trained predictive model to the usage information;
determine an opportunity indication based on the user's contextual state; and
provide the opportunity indication to the client application, wherein the processor is further configured to, subsequent to providing the opportunity indication to the client application:
obtain feedback information regarding the user's reaction to the client application;
discern from the feedback information a label regarding at least one of availability and receptiveness of the user;
generate a training example by associating the label with the usage information;
update an existing training set by at least adding the training example to the existing training set to generate an updated training set; and
retrain the at least one trained predictive model based on the updated training set.

10. The prediction device of claim 9, wherein at least part of the usage information is obtained via an operating system application programmer interface (API) of the user device.

11. The prediction device of claim 9, wherein the processor is configured to:
receive the at least one trained predictive model from a remote predictive model training device.

12. The prediction device of claim 9, wherein in discerning, the processor is configured to apply a trained feedback interpretation model to the feedback information to receive the label.

13. The prediction device of claim 9, wherein the feedback information describes the user activity on the user device subsequent to providing the opportunity indication to the client application.

14. The prediction device of claim 13, wherein in discerning, the processor is configured to analyze the feedback information together with the usage information to determine whether the user changed their usage behavior.

15. A non-transitory machine-readable medium encoded with performed by a prediction device (170) for determining an opportune time for user interaction, the non-transitory machine-readable medium comprising:
instructions for receiving a request from a client application (110, 266) for an indication of whether a user is open to participate in a user interaction;
instructions for obtaining usage information regarding the user's recent activity on a user device (320, 420);
instructions for applying at least one trained predictive model (172, 174, 276, 338, 434) to the usage information to identify the user's current contextual state, wherein the current contextual state comprises at least one of:
an availability measure representative of the user's current ability to perform a physical action associated with the user interaction, and
a receptiveness measure representative of the user's current ability to pay attention to the user interaction;
instructions for determining an opportunity indication based on the user's contextual state; and
instructions for providing the opportunity indication to the client application, wherein the non-transitory machine-readable medium further comprises instructions for, subsequent to providing the opportunity indication to the client application:
obtaining feedback information regarding the user's reaction to the client application;
discerning from the feedback information a label regarding at least one of availability and receptiveness of the user;
generating a training example by associating the label with the usage information;
updating an existing training set (274, 334, 428) by at least adding the training example to the existing training set to generate an updated training set; and
retraining the at least one trained predictive model based on the updated training set.

## Patentansprüche

1. Eine Methode, die von einem Prognosegerät (170) durchgeführt wird, um den geeigneten Zeitpunkt für eine Benutzerinteraktion zu ermitteln, wobei die Methode Folgendes umfasst:
Empfangen einer Anforderung von einer Client-Anwendung (110, 266), um zu ermitteln, ob ein Benutzer für eine Benutzerinteraktion verfügbar ist;
Abrufen von Nutzungsdaten in Bezug auf die letzte Aktivität des Benutzers auf einem Benutzergerät (320, 420) ;
Übernehmen mindestens eines angepassten Prognosemodells (172, 174, 276, 338, 434) für die Nutzungsdaten, um den derzeitigen kontextuellen Status des Benutzers zu ermitteln, wobei dieser mindestens einen der folgenden Aspekte umfasst:
den Grad der Verfügbarkeit, der der derzeitigen Fähigkeit des Benutzers entspricht, eine physische Aktion im Zusammenhang mit der Benutzerinteraktion durchzuführen, und
den Grad der Bereitschaft, der der derzeitigen Fähigkeit des Benutzers entspricht, seine Aufmerksamkeit auf die Benutzerinteraktion zu richten;
Ermitteln der Möglichkeiten beruhend auf dem kontextuellen Status des Benutzers;
Bereitstellen der ermittelten Möglichkeiten für die Client-Anwendung; und
im Anschluss an das Bereitstellen der ermittelten Möglichkeiten für die Client-Anwendung:
Abrufen von Feedbackdaten in Bezug auf die Reaktion des Benutzers auf die Client-Anwendung;
Ableiten einer Kennzeichnung entweder der Verfügbarkeit oder der Bereitschaft des Benutzers anhand der Feedbackdaten;
Generieren eines Lernbeispiels durch Zuordnen der Kennzeichnung zu den Nutzungsdaten;
Aktualisieren eines vorhandenen Lerndatensatzes (274, 334, 428), indem das Lernbeispiel dem vorhandenen Lerndatensatz hinzugefügt wird, um einen aktualisierten Lerndatensatz zu erstellen; und
Aktualisieren mindestens eines angepassten Prognosemodells anhand des aktualisierten Lerndatensatzes.

2. Die Methode gemäß Anspruch 1, wobei die ermittelten Möglichkeiten den aktuellen kontextuellen Status umfassen.

3. Die Methode gemäß Anspruch 1, wobei mindestens ein Teil der Nutzungsdaten über die API (Application Programming Interface) des Betriebssystems des Benutzergeräts abgerufen wird.

4. Die Methode gemäß Anspruch 1, wobei die Schritte zum Empfangen, Abrufen, Übernehmen, Ermit-teln und Bereitstellen von einem Prozessor (200) des Benutzergeräts durchgeführt werden.

5. Die Methode gemäß Anspruch 1, wobei diese zudem Folgendes umfasst:
Empfangen mindestens eines angepassten Prognosemodells von einem Remote-Lerngerät für das Prognosemodell.

6. Die Methode gemäß Anspruch 1, wobei beim Empfangen der Kennzeichnung der Ableitungsschritt das Übernehmen eines angepassten Feedbackinterpretationsmodells für die Feedbackdaten umfasst.

7. Die Methode gemäß Anspruch 1, wobei die Feedbackdaten die Benutzeraktivität auf dem Benutzergerät im Anschluss an das Bereitstellen der Möglichkeitsdaten für die Client-Anwendung beschreiben.

8. Die Methode gemäß Anspruch 7, wobei der Schritt des Ableitens eine Analyse der Feedback- und Nutzungsdaten umfasst, um zu ermitteln, inwieweit der Benutzer sein Benutzerverhalten geändert hat.

9. Ein Prognosegerät (170) zum Ermitteln des geeigneten Zeitpunkts für eine Benutzerinteraktion, das Folgendes umfasst:
einen Speicher, auf dem mindestens ein angepasstes Prognosemodell (172, 174) zum Ermitteln des derzeitigen kontextuellen Status des Benutzers gespeichert werden kann, wobei der kontextuelle Status mindestens einen der folgenden Aspekte umfasst:
den Grad der Verfügbarkeit, der der derzeitigen Fähigkeit des Benutzers entspricht, eine physische Aktion im Zusammenhang mit der Benutzerinteraktion durchzuführen, und
den Grad der Bereitschaft, der der derzeitigen Fähigkeit des Benutzers entspricht, seine Aufmerksamkeit auf die Benutzerinteraktion zu richten; und
einen Prozessor, der mit dem Speicher kommuniziert und für Folgendes konfiguriert ist:
Empfangen einer Anforderung von einer Client-Anwendung, um zu ermitteln, ob ein Benutzer für eine Benutzerinteraktion verfügbar ist;
Abrufen von Nutzungsdaten in Bezug auf die letzte Aktivität des Benutzers auf einem Benutzergerät;
Übernehmen mindestens eines angepassten Prognosemodells für die Nutzungsdaten;
Ermitteln der Möglichkeiten beruhend auf dem kontextuellen Status des Benutzers; und
Bereitstellen der Möglichkeitsdaten für die Client-Anwendung, wobei der Prozessor zudem so konfiguriert ist, dass er im Anschluss an das Bereitstellen der Möglichkeitsdaten für die Client-Anwendung:
Feedbackdaten in Bezug auf die Reaktion des Benutzers abruft;
die Kennzeichnung entweder der Verfügbarkeit oder der Bereitschaft des Benutzers anhand der Feedbackdaten ableitet;
ein Lernbeispiel durch Zuordnen der Kennzeichnung zu den Nutzungsdaten generiert;
einen vorhandenen Lerndatensatz zu aktualisieren, indem das Lernbeispiel dem vorhandenen Lerndatensatz hinzugefügt wird, um einen aktualisierten Lerndatensatz zu erstellen; und
mindestens ein angepasstes Prognosemodell anhand des aktualisierten Lerndatensatzes aktualisiert.

10. Das Prognosegerät gemäß Anspruch 9, wobei mindestens ein Teil der Nutzungsdaten über die API (Application Programming Interface) des Betriebssystems des Benutzergeräts abgerufen wird.

11. Das Prognosegerät gemäß Anspruch 9, wobei der Prozessor für Folgendes konfiguriert ist:
Empfangen mindestens eines angepassten Prognosemodells von einem Remote-Lerngerät für das Prognosemodell.

12. Das Prognosegerät gemäß Anspruch 9, wobei der Prozessor zum Ableiten so konfiguriert ist, dass er zum Empfangen der Kennzeichnung ein angepasstes Feedbackinterpretationsmodell für die Feedbackdaten übernimmt.

13. Das Prognosegerät gemäß Anspruch 9, wobei die Feedbackdaten die Benutzeraktivität auf dem Benutzergerät im Anschluss an das Bereitstellen der Möglichkeitsdaten für die Client-Anwendung beschreiben.

14. Das Prognosegerät gemäß Anspruch 13, wobei der Prozessor zum Ableiten so konfiguriert ist, dass eine Analyse der Feedback- und Nutzungsdaten erfolgt, um zu ermitteln, inwieweit der Benutzer sein Benutzerverhalten geändert hat.

15. Ein nicht flüchtiges, maschinenlesbares, mit den Schritten eines Prognosegeräts (170) codiertes Medium zum Ermitteln des geeigneten Zeitpunkts für eine Benutzerinteraktion, das Folgendes umfasst:
Anweisungen für das Empfangen einer Anforderung von einer Client-Anwendung (110, 266), um zu ermitteln, ob ein Benutzer für eine Benutzerinteraktion verfügbar ist;
Anweisungen für das Abrufen von Nutzungsdaten in Bezug auf die letzte Aktivität des Benutzers auf einem Benutzergerät (320, 420);
Anweisungen zum Übernehmen mindestens eines angepassten Prognosemodells (172, 174, 276, 338, 434) für die Nutzungsdaten, um den derzeitigen kontextuellen Status des Benutzers zu ermitteln, wobei dieser mindestens einen der folgenden Aspekte umfasst:
den Grad der Verfügbarkeit, der der derzeitigen Fähigkeit des Benutzers entspricht, eine physische Aktion im Zusammenhang mit der Benutzerinteraktion durchzuführen, und
den Grad der Bereitschaft, der der derzeitigen Fähigkeit des Benutzers entspricht, seine Aufmerksamkeit auf die Benutzerinteraktion zu richten;
Anweisungen für das Ermitteln der Möglichkeiten beruhend auf dem kontextuellen Status des Benutzers; und
Anweisungen zum Bereitstellen der Möglichkeitsdaten für die Client-Anwendung, wobei das nicht flüchtige, maschinenlesbare Medium zudem Anweisungen für folgende Schritte umfasst, die im Anschluss an das Bereitstellen der Möglichkeitsdaten für die Client-Anwendung durchgeführt werden:
Abrufen der Feedbackdaten in Bezug auf die Reaktion des Benutzers;
Ableiten einer Kennzeichnung entweder der Verfügbarkeit oder der Bereitschaft des Benutzers anhand der Feedbackdaten;
Generieren eines Lernbeispiels durch Zuordnen der Kennzeichnung zu den Nutzungsdaten;
Aktualisieren eines vorhandenen Lerndatensatzes (274, 334, 428), indem das Lernbeispiel dem vorhandenen Lerndatensatz hinzugefügt wird, um einen aktualisierten Lerndatensatz zu erstellen; und
Aktualisieren mindestens eines angepassten Prognosemodells anhand des aktualisierten Lerndatensatzes.

## Revendications

1. Procédé mis en œuvre par un dispositif de prédiction (170) permettant de déterminer un moment opportun pour une interaction utilisateur, ledit procédé consistant:
à recevoir une demande d'une application client (110, 266) pour une indication si un utilisateur est prêt à participer à une interaction utilisateur;
à obtenir des informations d'utilisation concernant l'activité récente d'un utilisateur sur un dispositif utilisateur (320, 420);
à appliquer au moins un modèle prédictif appris (172, 174, 276, 338, 434) aux informations d'utilisation pour identifier l'état contextuel actuel de l'utilisateur, dans lequel l'état contextuel actuel comprend au moins l'une parmi:
une mesure de disponibilité représentative de la capacité actuelle de l'utilisateur à effectuer une action physique associée à l'interaction utilisateur, et
une mesure de réceptivité représentative de la capacité actuelle de l'utilisateur à prêter attention à l'interaction utilisateur;
à déterminer une indication d'opportunité en fonction de l'état contextuel de l'utilisateur ;
à fournir l'indication d'opportunité à l'application client; et
après avoir fourni l'indication d'opportunité à l'application client:
à obtenir des informations de rétroaction concernant la réaction de l'utilisateur à l'application client;
à discerner, à partir des informations de rétroaction, une étiquette concernant au moins l'une parmi la disponibilité et la réceptivité de l'utilisateur;
à générer un exemple d'apprentissage en associant l'étiquette aux informations d'utilisation;
à mettre à jour un ensemble d'apprentissage (274, 334, 428) existant en ajoutant au moins l'exemple d'apprentissage à l'ensemble d'apprentissage existant pour générer un ensemble d'apprentissage mis à jour; et
à recycler l'au moins un modèle prédictif appris en fonction de l'ensemble d'apprentissage mis à jour.

2. Procédé selon la revendication 1, dans lequel l'indication d'opportunité comprend l'état contextuel actuel.

3. Procédé selon la revendication 1, dans lequel au moins une partie des informations d'utilisation est obtenue par l'intermédiaire d'une interface de programmation d'application, API, du système d'exploitation du dispositif utilisateur.

4. Procédé selon la revendication 1, dans lequel les étapes de réception, d'obtention, d'application, de détermination et de fourniture sont mises en œuvre par un processeur (200) du dispositif utilisateur.

5. Procédé selon la revendication 1, consistant en outre:
à recevoir l'au moins un modèle prédictif appris d'un dispositif d'apprentissage de modèle prédictif distant.

6. Procédé selon la revendication 1, dans lequel l'étape de discernement consiste à appliquer un modèle d'interprétation de rétroaction appris aux informations de rétroaction pour recevoir l'étiquette.

7. Procédé selon la revendication 1, dans lequel les informations de rétroaction décrivent l'activité de l'utilisateur sur le dispositif utilisateur après avoir fourni l'indication d'opportunité à l'application client.

8. Procédé selon la revendication 7, dans lequel l'étape de discernement consiste à analyser les informations de rétroaction conjointement avec les informations d'utilisation pour déterminer si l'utilisateur a changé son comportement d'utilisation.

9. Dispositif de prédiction (170) pour déterminer un moment opportun pour l'interaction utilisateur, ledit dispositif de prédiction comprenant:
une mémoire configurée pour mémoriser au moins un modèle prédictif appris (172, 174) pour identifier l'état contextuel actuel d'un utilisateur, dans lequel l'état contextuel actuel comprend au moins l'une parmi:
une mesure de disponibilité représentative de la capacité actuelle de l'utilisateur à effectuer une action physique associée à l'interaction utilisateur, et
une mesure de réceptivité représentative de la capacité actuelle de l'utilisateur à prêter attention à l'interaction utilisateur; et
un processeur en communication avec la mémoire, ledit processeur étant configuré:
pour recevoir une demande d'une application client pour savoir si un utilisateur est prêt à participer à une interaction utilisateur;
pour obtenir des informations d'utilisation concernant l'activité récente de l'utilisateur sur un dispositif utilisateur;
pour appliquer l'au moins un modèle prédictif appris aux informations d'utilisation;
pour déterminer une indication d'opportunité en fonction de l'état contextuel de l'utilisateur; et
pour fournir l'indication d'opportunité à l'application client, le processeur étant en outre configuré, après avoir fourni l'indication d'opportunité à l'application client:
pour obtenir des informations de rétroaction concernant la réaction de l'utilisateur à l'application client;
pour discerner, à partir des informations de rétroaction, une étiquette concernant au moins une parmi la disponibilité et la réceptivité de l'utilisateur;
pour générer un exemple d'apprentissage en associant l'étiquette aux informations d'utilisation;
pour mettre à jour un ensemble d'apprentissage existant en ajoutant au moins l'exemple d'apprentissage à l'ensemble d'apprentissage existant pour générer un ensemble d'apprentissage mis à jour; et
pour recycler l'au moins un modèle prédictif appris en fonction de l'ensemble d'apprentissage mis à jour.

10. Dispositif de prédiction selon la revendication 9, dans lequel au moins une partie des informations d'utilisation est obtenue par l'intermédiaire d'une interface de programmation d'application (API) du système d'exploitation du dispositif utilisateur.

11. Dispositif de prédiction selon la revendication 9, dans lequel le processeur est configuré:
pour recevoir l'au moins un modèle prédictif appris d'un dispositif d'apprentissage de modèle prédictif distant.

12. Dispositif de prédiction selon la revendication 9, dans lequel, dans l'étape de discernement, le processeur est configuré pour appliquer un modèle d'interprétation de rétroaction appris aux informations de rétroaction pour recevoir l'étiquette.

13. Dispositif de prédiction selon la revendication 9, dans lequel les informations de rétroaction décrivent l'activité de l'utilisateur sur le dispositif utilisateur après avoir fourni l'indication d'opportunité à l'application client.

14. Dispositif de prédiction selon la revendication 13, dans lequel, dans l'étape de discernement, le processeur est configuré pour analyser les informations de rétroaction avec les informations d'utilisation pour déterminer si l'utilisateur a changé son comportement d'utilisation.

15. Support non transitoire lisible par machine codé à l'aide d'un dispositif de prédiction (170) pour déterminer un moment opportun pour l'interaction utilisateur, ledit support non transitoire lisible par machine comprenant:
des instructions pour recevoir une demande d'une application client (110, 266) pour indiquer si un utilisateur est prêt à participer à une interaction utilisateur;
des instructions pour obtenir des informations d'utilisation concernant l'activité récente de l'utilisateur sur un dispositif utilisateur (320, 420) ;
des instructions pour appliquer au moins un modèle prédictif appris (172, 174, 276, 338, 434) aux informations d'utilisation pour identifier l'état contextuel actuel de l'utilisateur, dans lequel l'état contextuel actuel comprend au moins l'une parmi:
une mesure de disponibilité représentative de la capacité actuelle de l'utilisateur à effectuer une action physique associée à l'interaction utilisateur, et
une mesure de réceptivité représentative de la capacité actuelle de l'utilisateur à prêter attention à l'interaction utilisateur;
des instructions pour déterminer une indication d'opportunité en fonction de l'état contextuel de l'utilisateur; et
des instructions pour fournir l'indication d'opportunité à l'application client, dans lequel le support non transitoire lisible par machine comprend en outre des instructions, après avoir fourni l'indication d'opportunité à l'application client:
pour obtenir des informations de rétroaction concernant la réaction de l'utilisateur à l'application client;
pour discerner à partir des informations de rétroaction une étiquette concernant au moins l'une parmi la disponibilité et la réceptivité de l'utilisateur;
pour générer un exemple d'apprentissage en associant l'étiquette aux informations d'utilisation;
pour mettre à jour un ensemble d'apprentissage (274, 334, 428) existant en ajoutant au moins l'exemple d'apprentissage à l'ensemble d'apprentissage existant pour générer un ensemble d'apprentissage mis à jour; et
pour réapprendre au moins un modèle prédictif appris en fonction de l'ensemble d'apprentissage mis à jour.
